# EUROPEAN PATENT SPECIFICATION

(11) **EP 2 091 301 B1**
(45) Date of publication and mention of the grant of the patent: **10.04.2013**
(21) Application number: 08101352.6
(22) Date of filing: 07.02.2008
(51) Int. Cl.: H05B 33/08

(54) **Light measurement system comprising LEDs**
Lichtmesssystem mit LEDs
Système de mesure de la lumière comprenant des DEL

(43) Date of publication of application: 19.08.2009
(73) Proprietor: Tridonic Jennersdorf GmbH, 8380 Jennersdorf (AT)
(72) Inventor: Hoschopf, Hans, 8380 Jennersdorf (AT)
(74) Representative: Rupp, Christian

(56) References cited:
- WO-A-2004/057923
- WO-A-2007/121574
- US-B1- 6 476 396

## Description

The present invention generally relates to a lighting system that can be controlled and operated by a dedicated controlling unit. More specifically, the present invention relates to lighting systems including the feature of measuring the light emitted by the light sources so as to enable an adaptive operation of the lighting system by the controlling unit.

It is well known in the art to measure or sense the specified colored light emitted by light or illumination sources. This is especially useful to correctly control and operate the light sources in order to obtain a desired illumination, e.g. a desired color or a desired intensity.

The need for controlling the illumination is particularly important when a plurality of light sources like LEDs (Light Emitting Diodes) is combined to generate a mixed light. Indeed the contribution of each LED may vary among time such that it may be necessary to regulate said contribution of each LED to the mixed light in such a way that the overall generated mixed light characteristics remain constant at a desired level of color or intensity etc.

Corresponding systems are well known for measuring or sensing the light generated by a plurality of LEDs arranged according to the RGB (Red Green Blue) color model. Such an LEDs arrangement can comprise LEDs of three different colors, preferably red, green and blue, emitting in corresponding wavelengths and is able to reproduce any color, which is located within the color triangle delimited by said three colors red, green and blue, in a chromaticity diagram such as e.g. the CIE 1931 color space.

To ensure that the generated mixed light keeps constant characteristics over time, a state of the art method consists in measuring light having different wavelengths by utilizing at least three different detectors, mainly RGB detectors, or filters to get the illumination information for each light unit.

Therefore three different detectors or filters are needed, wherein each filter will be only permeable to a given wavelength range, i.e. only permeable to red, green or blue light. Those three filters are placed in front of a light sensible detector that can be CCD (Charge-Coupled Device) arrays, diodes, but also transistors or resistors.

The problem of this state of the art solution is that each semiconductor has different performance characteristics. Therefore matched semiconductors or compensation of the differences between the detectors is required.

A further disadvantage of this approach is that it requires a large number of expensive detectors or filters to sense the individual color components of the mixed light.

WO 2004/057 923 Al discloses an alternative way of sensing the individual color components of a mixed light by providing a light source control apparatus including three light sources in form of three LEDs that emit a respective light signal at three discrete and different frequencies. Each light source also emits a reference signal at the discrete frequency corresponding to the respective emitted light signal.

The apparatus further includes a photo detector optically coupled to the three light sources and designed to receive the light signal generated by said three sources. The apparatus additionally includes three lock-in systems coupled to the photo detector and each light source, to receive the light signal from the photo detector and an associated reference signal from the light sources.

Each lock-in amplifier in fact receives the light signal from the photo detector as well as the reference signal from the corresponding LED. By multiplying said received light signal by said received reference signal, the lock-in amplifier is able to generate an intensity value depicting the intensity of the light emitted by the corresponding LED.

A control system for RGB LEDs will then receive from the three lock-in amplifiers the intensity value of the light generated by the red, the green and the blue LED.

On the basis of the intensity values, the control system can regulate the light emitted by each LED to compensate for variations of each individual LED so that the characteristics of the mixed light may remain constant.

However the proposed system includes three lock-in amplifiers, also known as phase sensitive detectors. These lock-in devices are expensive devices that can extract a signal with a known carrier wave from a noisy environment. Each lock-in device indeed extracts a given discrete frequency corresponding to the light emitted by the red, green or blue LED from among the noisy environment of the light signal generated by the photo detector.

The included lock-in amplifiers are homodynes, i.e. they mix the light signal with a reference signal having the same frequency as the signal to be detected, with an extremely low pass filter which makes them very narrow band. The described prior art system requires such precise filtering since a gap of 100 Hz is used between the different discrete frequencies: the first LED is operated at a discrete frequency of 400 Hz while the second and the third LEDs are operated at 500 and 600 Hz respectively.

Further on the lock-in amplifiers of the described prior art use mixing, through a frequency mixer, to convert the signal's phase and amplitude to a DC-actually a time-varying low-frequency-voltage signal, thus requiring a feedback loop from the lock-in amplifier to the drive of the LEDs.

It is therefore an object to simplify the measurement of the light generated by individual light sources.

According to a first aspect of the present invention, a light control device is proposed. The device comprises a photo sensor for sensing the light generated by at least two light sources, each light source generating light at a discrete frequency, and for generating a signal on the basis of said sensing. The devices comprises a filter for extracting from the signal generated by the photo sensor at least two signals having a frequency corresponding to said discrete frequency.

The filter is a lock-in amplifier, which is configured to successively tune on the distinct driving frequencies to filter them successively out of the signal received from the photo sensor.

The discrete frequencies can preferably be logarithmically spaced.

The discrete frequencies can alternatively be equally spaced.

The filter can comprise at least one input to receive information about the frequency at which said light source generates light.

The filter can comprise at least one input to receive for each light source a reference signal at a frequency corresponding to the frequency at which said light source generates light.

The device can comprise means for determining the intensity of the light generated by the light sources on the basis of the signals extracted by the filter.

The device can preferably comprise a control unit for controlling or regulating the intensity emitted by each light source.

The control unit can be adapted to receive temperature information about the light sources and to determine a driving signal for the light sources on the basis of the intensity and temperature information.

The device can comprise a lookup table for determining the driving signal for the light sources on the basis of the intensity and temperature information.

The foregoing form as well as other forms, features and advantages of the invention will become further apparent from the following detailed description of the embodiments, read in conjunction with the accompanying drawings. The detailed description and drawings are merely illustrative of the invention rather than limiting, the scope of the invention being defined by the appended claims.
- Fig. 1: illustrates a light control system according to a first embodiment of the present invention,
- Fig. 2: shows the signals obtained by an electrical filter implemented according to the present invention,
- Fig. 3: illustrates a further embodiment of the present invention, and
- Fig. 4: illustrates a light control system according to a further embodiment of the invention.

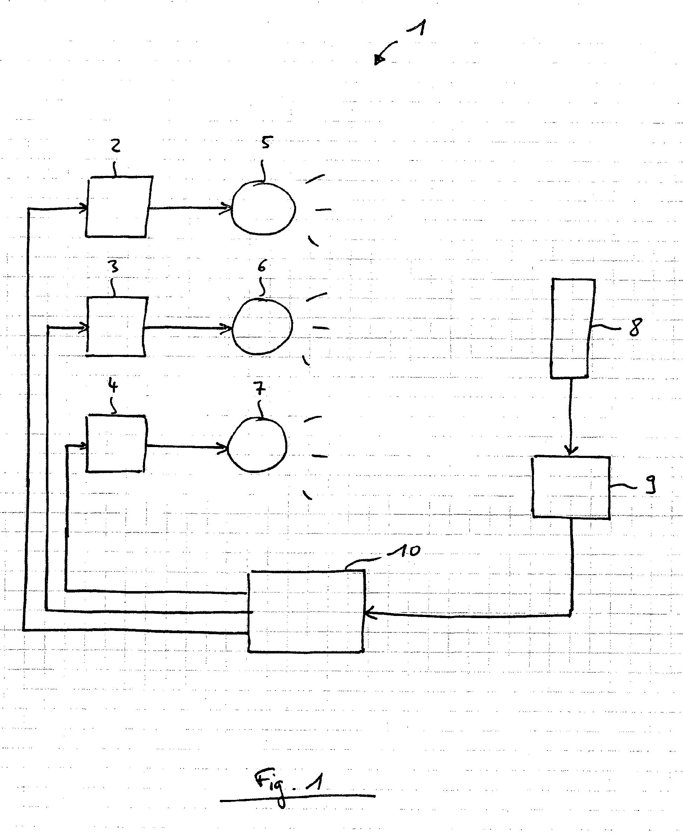

Fig. 1 shows a light control system 1 according to an embodiment of the present invention.

The light control system 1 comprises driving units 2, 3, 4, light sources 5, 6, 7, a photo sensor 8 and an electronic filter 9. In the particular embodiment of Fig. 1 there are altogether three driving units that respectively drive and actuate three light sources.

The particular embodiment of Fig. 1 includes three driving units 2, 3, 4. Other embodiments may include only one or two or even more than four such driving units.

Each driving unit may control more than one light unit. According to alternate embodiments a driving unit may control a plurality of light units of the same type.

A driving unit 2, 3, 4 in fact outputs one driving signal for one or a plurality of light units 5, 6, 7. The driving units 2, 3, 4 are connected to respective light units 5, 6, 7 such that the driving signal of the respective driving unit commands the operation of the connected light units.

The embodiment of Fig. 1 comprises LEDs (light emitting diodes) as light units 5, 6, 7. According to alternative embodiments the LEDs can be replaced by alternate light sources like incandescent light bulbs, lasers, gas discharge lamps such as fluorescent lamps, etc.

Each driving unit 2, 3, 4 commands one LED, or according to alternative embodiments a plurality of LEDs. The LEDs may emit in an identical, similar or different frequency spectrum. This means that the invention is able to drive LEDs of different or the same color. In case that a driving unit 2, 3, 4 commands a group of LEDs, the LEDs of that group are preferably of the same color. For example a red, a green and a blue LED, or group of LEDs, may be combined in the system in order to generate a white mixed light.

The different LEDs according to the embodiment of Fig. 1, or groups of LEDs according to alternative embodiments, are driven with a current which is modulated with a specific supply frequency. In other words each LED or LED group in the light control system 1 is driven with a distinct i.e. different driving signal.

Each independently driven LED or group of LEDs is actuated by a distinct driving signal and will as a consequence emit a corresponding light intensity.

The different driving signals comprise a specific distinct supply frequency. Each light unit 5, 6, 7 receives a driving signal and generates a light intensity based on the driving signal, i.e. based on the specific supply frequency.

This is essentially possible because the LEDs are able to follow with their intensity the frequency of the driving signal or current. The intensity of the light emitted by a light unit 5, 6, 7 has therefore to follow the curve of the driving signal or has to be proportional or essentially proportional to said driving signal.

The frequency of each driving signal is different. According to an embodiment the frequencies of the driving signals are equally or substantially equally spaced, e.g. 1 kHz, 1,2 kHz and 1,4 kHz.

According to another embodiment said frequencies may be logarithmically spaced. In case that the system 1 comprises three driving units 2, 3, 4 the three distinct frequencies of the generated driving signals may be e.g. 1, 10 and 100 kHz. Should the system 1 comprise four driving units 2, 3, 4, the fourth driving signal frequency may be chosen as being 1000 kHz.

This logarithmic relation between the discrete frequencies facilitates the design and setup of the electronic filters. The broader the gap between the frequencies is, the less the disruptive factor will be.

The light signals emitted by the LED or group of LEDs are combined or mixed and then sensed by the photo sensor 8. Said photo sensor 8 is adapted to sense or detect said mixed light obtained by combining or mixing the different light signals.

The photo sensor 8 is a device known in the art and can e.g. consist in a photo resistor or a photo diode. The photo sensor 8 outputs a signal corresponding to the sensed mixed light and thus comprising information about each combined light signal.

The electrical signal generated by the photo sensor 8 comprises the frequencies f2, f3, f4 of each driving signal produced by the driving units 2, 3, 4. This means that the single photo sensor 9 will produce an electric signal representing a superposition of the different frequencies of the different driving signals.

The intensity of light emitted by the respective LEDs can then be measured by the electronic filter 9 connected to the photo sensor 8 and receiving the electrical signal generated by the photo sensor 8.

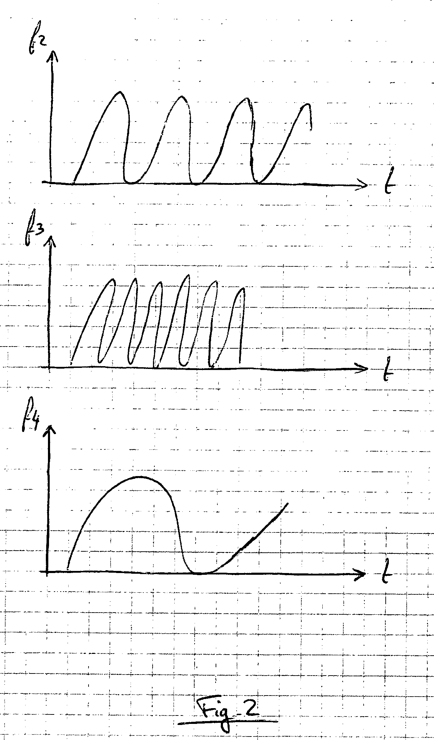

As can be seen in Fig. 2 the electronic filter 9 is adapted to filter the different driving frequencies f2, f3, f4 from the electrical signal of the photo sensor 8.

The electrical filter 9 should be adapted to the frequencies f2, f3, f4 and especially to the frequency spacing between said frequencies. In the example given above with driving frequencies at 1 kHz, 1,2 kHz and 1,4 kHz, the electrical filter 9 has to be a narrow-band filter to filter only a narrow frequency band around the given driving frequency.

An example of such a narrow-band filter is a lock-in amplifier. Such a lock-in amplifier will be tuned on the driving frequencies of the currents of the different LEDs.

The system 1 in fact requires only one single lock-in amplifier in that it is successively tuned on the distinct driving frequencies to filter them successively out of the signal received from the photo sensor 8.

In any case the electrical filter 9 of the embodiment of Fig. 1 gains three signals at the different driving frequencies f2, f3, f4 from the electrical signal generated by the photo sensor 8 as shown in Fig. 2. Said filtered signals comprise information about the intensity of the light emitted by the LED actuated at the given driving frequency.

For each LED 5, 6, 7 the control unit 10 determines the amplitude of light generated or emitted by said LED. On the basis of the amplitude information of a particular LED, the control unit 10 can control the driving unit 2, 3, 4 actuating this particular LED.

In this way it is possible to perform a regulation of the light intensity of the different LEDs with only one photo sensor 8 and only one electrical filter 9.

The driving frequencies f2, f3, f4 can be fixed or can be dynamically allocated to each driving unit 2, 3, 4.

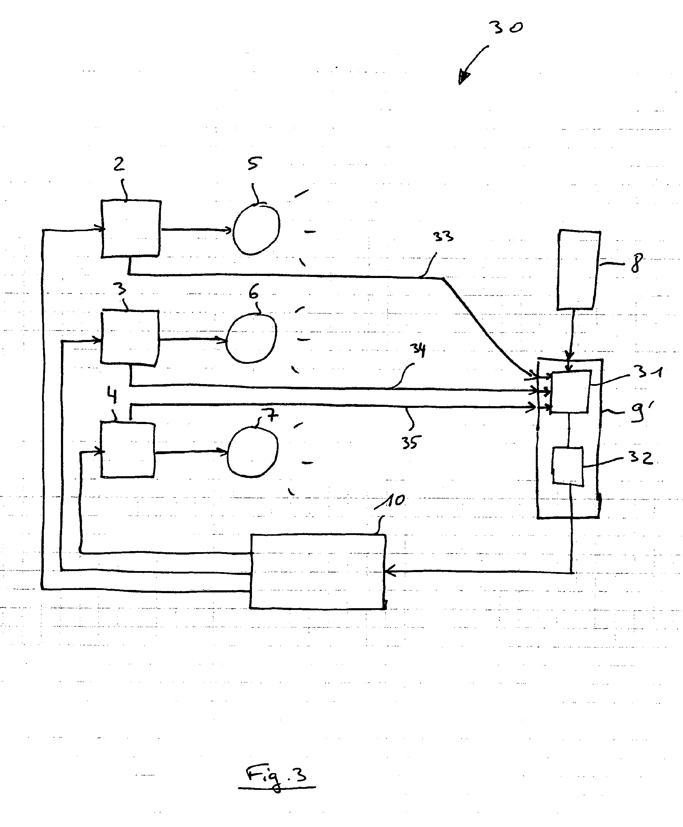

In case of a dynamical allocation, the electrical filter 9 has to know exactly what driving frequencies are used. Fig. 3 shows that the driving units 2, 3, 4 are connected directly to the electrical filter to transmit the values of the driving frequencies.

A dynamical allocation is e.g. possible with a lock-in amplifier that can comprise a frequency multiplier 31 for successively multiplying the signal generated by the photo sensor 8 by a reference signal 33, 34, 35 received from each light source 5, 6, 7, see Fig. 3. A filter 32 is connected to the frequency multiplier 31 for removing non-dc components from the signal received from the frequency multiplier and for successively outputting the amplitude of the light generated by each light source 5, 6, 7.

In alternative embodiments the information about the driving frequencies could also be transmitted to the electrical filter 9 by the control unit 10.

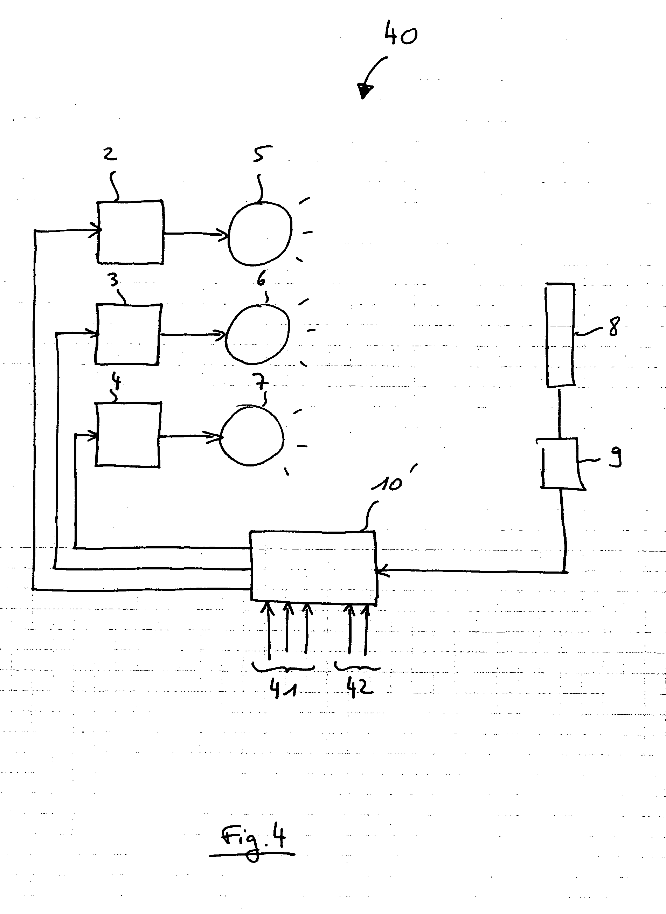

Fig. 4 shows a further embodiment of the present invention.

The embodiment of Fig. 4 is modified in that additional temperature information is supplied to the processing. The system 40' thus comprises a control unit 10' adapted to receive such temperature information 41. The reason therefore is that the invention proposes a pure frequency-based intensity measurement which does not intrinsically contain spectral information.

The characteristics of the light emitted by the LEDs 5, 6, 7 depend not only on the driving signal but also on temperature. Special sensors (not shown) are therefore provided to transmit the LED temperatures 41 to the control unit 10'.

On the basis of the temperature information and the intensity information said control unit 10' is able to maintain the LED characteristics nearly constant over time.

It is preferable to maintain a pre-stored lookup table e.g. in the controlling unit so as to gain an exact information on the current behavior of the LED including the intensity and the spectrum.

On the basis of this information an output signal for driving the LED can be generated such that the LED arrangement shows a desired (e.g. temperature-compensated) behavior. Depending on the temperature a white LED changes its spectrum such that this has to be compensated by correspondingly adjusting the drive currents of additional R, G or B diodes.

The control unit 10' is able to determine the driving signal or driving power requirements of the LED 5, 6, 7 by comparing the LED intensity value and/or the received thermal value 41 and/or possibly further received information 42 about the operation of the LED 5, 6, 7 or about the calibration of the LED 5, 6, 7.

Those information are compared with the LED-specific lookup table that gives for each combination of intensity value, thermal i.e. temperature information (and eventually further LED information).a value reflecting the actual contribution of each LED 5, 6, 7 to the mixed light source. On the basis of this contribution value the control unite 10' may specify the required driving signal for each LED 5, 6, 7 in order to generate a desired mixed light.

## Claims

1. A light control device, comprising:
- a photo sensor (8) for sensing the light generated by at least two light sources (5, 6, 7), each light source (5, 6, 7) generating light based on a signal of discrete frequency of a signal modulating said light sources, and for generating a signal on the basis of said sensed light,
- a filter (9) for extracting from the signal generated by the photo sensor (8) at least two signals having a frequency corresponding to said discrete frequency, and
- a control unit (10) for either one of controlling or regulating an intensity of light emitted by each light source (5, 6, 7),
wherein said control unit (10) is adapted to receive temperature information about the light sources (5, 6, 7) and to determine a driving signal for the light sources (5, 6, 7) based on the intensity of light and temperature information, and
wherein a lookup table comprising information about the light intensity and temperature is employed for determining the driving signal for the light sources (5, 6, 7),
**characterized in that** the filter (9) is a lock-in amplifier, which is configured to successively tune on the distinct driving frequencies to filter them successively out of the signal received from the photo sensor (8).

2. The light control device according to any of the preceding claims, wherein the filter (9) is further adapted to extract from the signal generated by the photo sensor (8) the amplitude of the light generated by each light source (5, 6, 7).

3. The light control device according to claim 4,
wherein the filter (9) is adapted to extract successively the amplitude of the light generated by each light source (5, 6, 7) from the signal generated by the photo sensor (8).

4. The light control device according to any of the preceding claims,
wherein the discrete frequencies are logarithmically spaced.

5. The light control device according to any of claims 1 to 5,
wherein the discrete frequencies are equally spaced.

6. The light control device according to any of the preceding claims,
wherein the filter (9) comprises at least one input to receive information (33, 34, 35) about the frequency at which said light source (5, 6, 7) generates light.

7. The light control device according to any of the preceding claims,
wherein the filter (9) comprises at least one input to receive for each light source (5, 6, 7) a reference signal at a frequency corresponding to the frequency at which said signal modulates said light source (5, 6, 7) to generates light.

8. The light control device according to any of the preceding claims,
comprising means (10) for determining the intensity of the light generated by the light sources (5, 6, 7) based on the signals extracted by the filter (9).

9. A light control system (1), comprising:
- at least two light sources (5, 6, 7), each light source being adapted to generate light based on a modulating signal of discrete frequency,
- driving units (2, 3, 4) for driving the light sources (5, 6, 7), and
- a light control device implemented according to any of the preceding claims.

## Patentansprüche

1. Lichtsteuervorrichtung, die aufweist:
- einen Fotosensor (8) zum Erfassen des Lichts, das von wenigstens zwei Lichtquellen (5, 6, 7) erzeugt wird, wobei jede Lichtquelle (5, 6, 7) Licht basierend auf einem Signal mit einer diskreten Frequenz eines Signals, das die Lichtquellen moduliert, erzeugt und zum Erzeugen eines Signals basierend auf dem erfassten Licht,
- ein Filter (9) zum Extrahieren von wenigstens zwei Signalen mit einer Frequenz, die dieser diskreten Frequenz entspricht, aus dem von dem Fotosensor (8) erzeugten Signal, und
- eine Steuereinheit (10) entweder zum Steuern oder Regulieren einer Intensität von Licht, das von jeder Lichtquelle (5, 6, 7) emittiert wird,
wobei die Steuereinheit (10) geeignet ist, Temperaturinformationen über die Lichtquellen (5, 6, 7) zu empfangen und basierend auf der Intensität von Licht und Temperaturinformationen ein Ansteuersignal für die Lichtquellen (5, 6, 7) zu bestimmen, und
wobei eine Nachschlagtabelle, die Informationen über die Lichtintensität und die Temperatur aufweist, verwendet wird, um das Ansteuersignal für die Lichtquellen (5, 6, 7) zu bestimmen,
**dadurch gekennzeichnet, dass** das Filter (9) ein Lock-in-Verstärker ist, der konfiguriert ist, um nacheinander auf die verschiedenen Ansteuerfrequenzen abgestimmt zu werden, um sie nacheinander aus dem von dem Fotosensor (8) empfangenen Signal heraus zu filtern.

2. Lichtsteuervorrichtung nach einem der vorhergehenden Ansprüche, wobei das Filter (9) ferner angepasst wird, um aus dem von dem Fotosensor (8) erzeugten Signal die Amplitude des von jeder Lichtquelle (5, 6, 7) erzeugten Lichts zu extrahieren.

3. Lichtsteuervorrichtung nach Anspruch 4,
wobei das Filter (9) geeignet ist, nacheinander die Amplitude des von jeder Lichtquelle (5, 6, 7) erzeugten Lichts aus dem von dem Fotosensor (8) erzeugten Signal zu extrahieren.

4. Lichtsteuervorrichtung nach einem der vorhergehenden Ansprüche,
wobei die diskreten Frequenzen logarithmisch beabstandet sind.

5. Lichtsteuervorrichtung nach einem der Ansprüche 1 bis 5,
wobei die diskreten Frequenzen gleichmäßig beabstandet sind.

6. Lichtsteuervorrichtung nach einem der vorhergehenden Ansprüche,
wobei das Filter (9) wenigstens einen Eingang aufweist, um Informationen (33, 34, 35) über die Frequenz zu empfangen, bei welcher die Lichtquelle (5, 6, 7) Licht erzeugt.

7. Lichtsteuervorrichtung nach einem der vorhergehenden Ansprüche,
wobei das Filter (9) wenigstens einen Eingang aufweist, um für jede Filterquelle (5, 6, 7) ein Referenzsignal bei einer Frequenz zu empfangen, die der Frequenz entspricht, bei welcher das Signal die Lichtquelle (5, 6, 7) moduliert, um Licht zu erzeugen.

8. Lichtsteuervorrichtung nach einem der vorhergehenden Ansprüche,
die Einrichtungen (10) zum Bestimmen der Intensität des von den Lichtquellen (5, 6, 7) erzeugten Lichts basierend auf den von dem Filter (9) erzeugten Signalen aufweist.

9. Lichtsteuersystem (1), das aufweist:
- wenigstens zwei Lichtquellen (5, 6, 7), wobei jede Lichtquelle geeignet ist, Licht basierend auf einem Modulationssignal mit diskreter Frequenz zu erzeugen,
- Ansteuereinheiten (2, 3, 4) zum Ansteuern der Lichtquellen (5, 6, 7), und
- eine Lichtsteuervorrichtung, die gemäß einem der vorhergehenden Ansprüche ausgebildet ist.

## Revendications

1. Dispositif de commande de lumière, comprenant :
- un photo-détecteur (8) pour détecter la lumière générée par au moins deux sources de lumière (5, 6, 7), chaque source de lumière (5, 6, 7) générant de la lumière sur la base d'un signal de fréquence discrète d'un signal modulant lesdites sources de lumière, et pour générer un signal sur la base de ladite lumière détectée,
- un filtre (9) pour extraire du signal généré par le photo-détecteur (8) au moins deux signaux ayant une fréquence correspondant à ladite fréquence discrète, et
- une unité de commande (10) pour soit commander soit réguler une intensité de lumière émise par chaque source de lumière (5, 6, 7),
dans lequel ladite unité de commande (10) est adaptée pour recevoir des informations de température concernant les sources de lumière (5, 6, 7) et pour déterminer un signal de commande pour les sources de lumière (5, 6, 7) sur la base de l'intensité de lumière et d'informations de température, et
dans lequel une table de recherche comprenant des informations concernant l'intensité de lumière et la température est utilisée pour déterminer le signal de commande pour les sources de lumière (5, 6, 7),
**caractérisé en ce que** le filtre (9) est un amplificateur lock-in, qui est configuré pour se régler successivement sur les différentes fréquences de commande pour les éliminer successivement du signal reçu du photo-détecteur (8) par filtrage.

2. Dispositif de commande de lumière selon l'une quelconque des revendications précédentes, dans lequel le filtre (9) est adapté en outre pour extraire du signal généré par le photo-détecteur (8) l'amplitude de la lumière générée par chaque source de lumière (5, 6, 7).

3. Dispositif de commande de lumière selon la revendication 2,
dans lequel le filtre (9) est adapté pour extraire successivement l'amplitude de la lumière générée par chaque source de lumière (5, 6, 7) à partir du signal généré par le photo-détecteur (8).

4. Dispositif de commande de lumière selon l'une quelconque des revendications précédentes,
dans lequel les fréquences discrètes sont espacées logarithmiquement.

5. Dispositif de commande de lumière selon l'une quelconque des revendications 1 à 4,
dans lequel les fréquences discrètes sont espacées régulièrement.

6. Dispositif de commande de lumière selon l'une quelconque des revendications précédentes,
dans lequel le filtre (9) comprend au moins une entrée pour recevoir des informations (33, 34, 35) concernant la fréquence à laquelle ladite source de lumière (5, 6, 7) génère de la lumière.

7. Dispositif de commande de lumière selon l'une quelconque des revendications précédentes,
dans lequel le filtre (9) comprend au moins une entrée pour recevoir pour chaque source de lumière (5, 6, 7) un signal de référence à une fréquence correspondant à la fréquence à laquelle ledit signal module ladite source de lumière ( 5, 6, 7) pour générer de la lumière.

8. Dispositif de commande de lumière selon l'une quelconque des revendications précédentes,
comprenant des moyens (10) pour déterminer l'intensité de la lumière générée par les sources de lumière (5, 6, 7) sur la base des signaux extraits par le filtre (9).

9. Système de commande de lumière (1), comprenant :
- au moins deux sources de lumière (5, 6, 7), chaque source de lumière étant adaptée pour générer de la lumière sur la base d'un signal de modulation de fréquence discrète,
- des unités de commande (2, 3, 4) pour commander les sources lumineuses (5, 6, 7), et
- un dispositif de commande de lumière implémenté selon l'une quelconque des revendications précédentes.
